# EUROPEAN PATENT SPECIFICATION

(11) **EP 1 945 566 B1**
(45) Date of publication and mention of the grant of the patent: **20.11.2019**
(21) Application number: 06799853.4
(22) Date of filing: 10.10.2006
(51) Int. Cl.: C01B 11/02

(54) **PROCESS FOR PRODUCTION OF CHLORINE DIOXIDE**
VERFAHREN ZUR HERSTELUNG VON CHLORDIOXID
PROCÉDÉ POUR LA PRODUCTION DE BIOXYDE DE CHLORE

(30) Priority: 10.11.2005 US 735192 P; 07.12.2005 EP 05111801
(43) Date of publication of application: 23.07.2008
(73) Proprietor: Akzo Nobel N.V., 6800 SB Arnhem (NL); Akzo Nobel Pulp and Performance Chemicals AB, 445 80 Bohus (SE)
(72) Inventor: WOODRUFF, Thomas, E., Marietta, Georgia 30064 (US); BURKE, Michael, Cumming, Georgia 30040 (US); CHARLES, Gary, A., Marietta, Georgia 30062 (US); BRYANT, Patrick, S., Woodstock, Georgia 30189 (US); MOLES, Donald, Fitzgerald, Woodstock, Georgia 30189 (US)
(74) Representative: HGF Limited
(86) International application number: PCT/SE2006/050393
(87) International publication number: WO 2007/055646

(56) References cited:
- WO-A-03/000586
- WO-A-2005/080262
- US-A1- 2003 031 621
- US-A1- 2004 175 322

## Description

### Field of the invention

The present invention relates to a process and a production unit for the production of chlorine dioxide from alkali metal chlorate, acid and a reducing agent.

### Background of the invention

Chlorine dioxide is used in various applications such as pulp bleaching, fat bleaching, water purification and removal of organic materials from industrial wastes. Since chlorine dioxide is not storage stable, it is generally produced on-site.

In large scale processes chlorine dioxide is usually produced by reacting alkali metal chlorate with a reducing agent in an aqueous reaction medium. Chlorine dioxide may be withdrawn from the reaction medium as a gas, as in the processes described in e.g. US patents 5091166, 5091167 and EP patent 612686. Normally, the chlorine dioxide gas is then absorbed into water to form an aqueous solution thereof. These large-scale processes are very efficient but require extensive process equipment and instrumentation

US 5376350 discloses a process for production of chlorine dioxide in a plug flow reactor where chlorine dioxide gas leaving the reactor is separated from the liquid stream. The liquid stream, containing un-reacted chlorate, may be fed to a single vessel chlorine dioxide process, as described above, to convert the un-reacted chlorate to chlorine dioxide.

For the production of chlorine dioxide in small-scale units, such as for water purification applications or small bleaching plants, the chlorine dioxide is usually not separated from the reaction medium. Instead, a production stream containing chlorine dioxide, salt, excess acid and optionally un-reacted chlorate is withdrawn from the reactor and used directly, optionally after dilution with water. Such processes have in recent years become commercial and are described in e.g. US patents 2833624, 4534952, 5895638, 6387344, 6790427, 7070710 and in US patent applications Publ. No. 2004/0175322, Publ. No. 2003/0031621 , Publ. No. 2005/0186131 and Publ. No. 2006/0133983. The required process equipment and instrumentation are considerably less extensive than in the large-scale processes described above. However, for some applications where the small-scale units are suitable, it may be desirable to obtain the chlorine dioxide as a gas phase or dissolved in an aqueous solution, without the excess acid and salt by-product.

### Summary of the invention

It is an object of the invention to provide a simple process for the production of chlorine dioxide substantially free from excess acid and salt by-product.

It is still another object of the invention to provide a production unit for performing the process.

### Brief description of the invention

It has surprisingly been found possible to meet these objects by providing a process for continuously producing chlorine dioxide comprising the steps of continuously:
(a) feeding to a reactor an acid, alkali metal chlorate and a reducing agent;
(b) reacting the alkali metal chlorate with the acid and the reducing agent to form a product stream comprising chlorine dioxide and alkali metal salt of the acid;
(c) bringing the product stream from the reactor to an eductor and mixing it with motive fluid fed to the eductor and thereby forming a diluted product stream;
(d) bringing the diluted product stream to a gas-liquid separator where gas is separated from liquid therein;
(e) withdrawing a gaseous product stream comprising chlorine dioxide and inert gas from said gas-liquid separator;
(f) withdrawing a liquid phase from the gas-liquid separator; wherein from 20 to 80%, preferably from 30 to 70%, most preferably from 40 to 65% of the chlorine dioxide in the diluted product stream brought to the gas-liquid separator is withdrawn in the gaseous product stream; and
(g) further comprising the step of recirculating at least a portion of the liquid phase withdrawn from the gas-liquid separator and feeding it to the eductor as motive fluid.

Operating the gas-liquid separator to effect separation of only a portion of the chlorine dioxide from the diluted product stream enables more efficient use of the process equipment. In order to utilise the chlorine dioxide remaining in the liquid phase, this may at least partly be recovered as a liquid product, is at least partly recirculated to the eductor, or a combination thereof.

Thus, in an embodiment of the invention the process comprises a step of recovering at least a portion of the liquid phase withdrawn from the gas-liquid separator as a chlorine dioxide containing liquid product, in addition to the gaseous product stream comprising chlorine dioxide. This liquid product can, for example, be used for bleaching or water treatment where the remaining acid, salt and other possible by-products do not make any significant harm.

According to the invention the process comprises a step of recirculating at least a portion of the liquid phase withdrawn from the gas-liquid separator and feeding it to the eductor as motive fluid.

In still a further embodiment of the invention a portion of the liquid phase withdrawn from the gas-liquid separator is recovered as a chlorine dioxide containing liquid product while another portion is recirculated and fed to the eductor as motive fluid. The ratio of the portion to be recovered as liquid product and the portion recirculated depends on the needs for each individual installation and may, for example, be from 1 :9 to 9:1

The reactor and the eductor can be operated as described in the earlier mentioned documents US patents 2833624, 4534952, 5895638, 6387344, 6790427, 7070710 and US patent application Publ. No. 2004/0175322, Publ. No. 2003/0031621 and Publ. No. 2006/0133983.

Any reducing agent commonly used in chlorine dioxide production such as sulphur dioxide, chloride, methanol and hydrogen peroxide can be used, of which hydrogen peroxide is particularly preferred.

The alkali metal chlorate is suitably fed to the reactor as an aqueous solution. The alkali metal may, for example, be sodium, potassium or mixtures thereof, of which sodium is most preferred. The acid is preferably a mineral acid such as sulfuric acid, hydrochloric acid, nitric acid, perchloric acid or mixtures thereof, of which sulfuric acid is most preferred. If the reducing agent is hydrogen peroxide, the molar ratio H₂O₂ to ClO₃⁻ fed to the reactor is suitably from 0.2:1 to 2:1 , preferably from 0.5:1 to 1.5:1, most preferably from 0.5:1 to 1 :1. Alkali metal chlorate always contains some chloride as an impurity, but it is fully possible also to feed more chloride to the reactor, such as metal chloride or hydrochloric acid. However, in order to minimize the formation of chlorine it is preferred to keep the amount of chloride ions fed to the reactor low, suitably below 1 mole %, preferably below 0.1 mole %, more preferably less than 0.05 mole%, most preferably less than 0.02 mole % Cl⁻ of the ClO₃⁻ (including chloride present as an impurity in the chlorate and other feed chemicals and optionally extra added chloride).

In the case sulfuric acid is used as a feed to the reactor, it preferably has a concentration from 60 to 98 wt%, most preferably from 70 to 85 wt%. It preferably has a temperature from 0 to 80°C, most preferably from 20 to 60°C Preferably from 2 to 7 kg H₂SO₄, most preferably from 3 to 5 kg H₂SO₄ is fed per kg ClO₂ produced. In order to use sulphuric acid of high concentration, a dilution and cooling scheme as described in US patent application Publ. No. 2004/0175322 is preferably applied.

In a particularly preferred embodiment alkali metal chlorate and hydrogen peroxide is fed to the reactor in the form of a premixed aqueous solution, for example a composition as described in US 7070710. Such a composition may be an aqueous solution comprising from 1 to 6.5 moles/litre, preferably from 3 to 6 moles/litre of alkali metal chlorate, from 1 to 7 moles/litre, preferably from 3 to 5 moles/litre of hydrogen peroxide and at least one of a protective colloid, a radical scavenger or a phosphonic acid based complexing agent, wherein the pH of the aqueous solution suitably is from 0.5 to 4, preferably from 1 to 3.5, most preferably from 1.5 to 3. Preferably, at least one phosphonic acid based complexing agent is present, preferably in an amount from 0.1 to 5 mmoles/litre, most preferably from 0.5 to 3 mmoles/litre. If a protective colloid is present, its concentration is preferably from 0.001 to 0.5 moles/litre, most preferably from 0.02 to 0.05 moles/litre. If a radical scavenger is present, its concentration is preferably from 0.01 to 1 moles/litre, most preferably from 0.02 to 0.2 moles/litre. Particularly preferred compositions comprise at least one phosphonic acid based complexing agent selected from the group consisting of 1-hydroxyethylidene-1 ,1-diphosphonic acid, 1-aminoethane- 1 ,1-diphosphonic acid, aminotri (methylenephosphonic acid), ethylene diamine tetra (methylenephosphonic acid), hexamethylene diamine tetra (methylenephosphonic acid), diethylenetriamine penta (methylenephosphonic acid), diethylenetriamine hexa (methylenephosphonic acid), 1-aminoalkane-1,1-diphosphonic acids (such as morpholinomethane diphosphonic acid, N,N-dimethyl aminodimethyl diphosphonic acid, aminomethyl diphosphonic acid), reaction products and salts thereof, preferably sodium salts. Useful protective colloids include tin compounds, such as alkali metal stannate, particularly sodium stannate (Na₂(Sn(OH)₆). Useful radical scavengers include pyridine carboxylic acids, such as 2,6-pyridine dicarboxylic acid. Suitably the amount of chloride ions is below 300 mmoles/litre, preferably below 50 mmoles/litre, more preferably below 5 mmoles/litre, most preferably below 0.5 mmoles/litre.

The temperature in the reactor is suitably maintained below the boiling point of the reactants and the liquid part of the product stream at the prevailing pressure, preferably from 20 to 80°C, most preferably from 30 to 60°C. The pressure maintained within the reactor is suitably slightly subatmospheric, preferably from 30 to 100 kPa absolute, most preferably from 65 to 95 kPa absolute.

The reactor may comprise one or several vessels, for example arranged vertically, horizontally or inclined. The reactants may be fed directly to the reactor or via a separate mixing device. Suitably the reactor is a preferably substantially tubular through- flow vessel or pipe, most preferably comprising means for mixing the reactants in a substantially uniform manner. Such means for mixing are described in e.g. US 6790427 and US patent application Publ. No. 2004/0175322.

The length (in the main flow direction) of the reactor used is preferably from 150 to 1500 mm, most preferably from 300 to 900 mm. It has been found favourable to use a substantially tubular reactor with an inner diameter from 25 to 300 mm, preferably from 50 to 150 mm. It is particularly favourable to use a substantially tubular reactor having a preferred ratio of the length to the inner diameter from 12:1 to 1 :1, most preferably from 8:1 to 4:1. A suitable average residence time in the reactor is in most cases from 1 to 60 seconds, preferably from 3 to 20 seconds.

If hydrogen peroxide is used as reducing agent, the reaction of alkali metal chlorate, acid and hydrogen peroxide results in the formation of a product stream in the reactor, normally comprising both liquid and foam, and containing chlorine dioxide, oxygen, alkali metal salt of the acid and, in most cases, some remaining unreacted feed chemicals. Chlorine dioxide and oxygen may be present both as dissolved in the liquid and as gas bubbles. If sulphuric acid is used the alkali metal salt is a sulphate salt. It has been found possible to achieve a conversion degree of alkali metal chlorate to chlorine dioxide from 75% to 100%, preferably from 80 to 100%, most preferably from 95 to 100%.

The feed chemicals, including acid, alkali metal chlorate and reducing agent, are preferably fed close to one end of the reactor and the product stream is preferably withdrawn at the other end of the reactor.

The product stream withdrawn from the reactor, including any liquid, foam and gas therein, is brought to the eductor, preferably by a suction force created by the eductor. The product stream is then mixed with motive fluid, such as water, fed to the reactor to form a diluted product stream. Any kind of eductor may be used, although it is particularly preferred to use an eductor where the motive fluid is brought to flow in an at least partially spiral or helical manner as described in US 6790427.

The diluted product stream obtained from the eductor, which still comprises chlorine dioxide and alkali metal salt of the acid, is brought to a gas-liquid separator where a part of the dissolved gas is separated. In order to facilitate the separation inert gas is preferably added to the diluted product stream, either within the gas-liquid separator or prior to entering the separator. Addition of inert gas also to dilutes the gaseous chlorine dioxide to minimise the risk for decomposition thereof. In some cases inert gas may be introduced into to the gaseous stream leaving the gas-liquid separator. The inert gas can be any gas that does not react with chlorine dioxide in the diluted product stream, such as nitrogen, oxygen, any of the noble gases or mixtures thereof. For practical reasons air is preferably used.

In order to facilitate the gas-liquid separation the temperature in the separator is preferably maintained from 30 to 90°C, most preferably from 40 to 80°C, particularly from 50 to 75°C.

The term gas-liquid separator as used herein, refers to any kind of equipment suitable for separating gas and liquid. Examples of gas-liquid separators are stripper columns, vented tanks, cyclone separators, etc.

Examples of stripper columns are plate columns, packed bed columns and wetted-wall (falling film) columns. In a preferred embodiment the stripper column is a packed bed column. Any kind of standard packing can be used in the stripper columns, examples of which include Raschig rings, Berl saddles, Intalox saddles etc. In a typical stripper column a liquid, with dissolved gaseous components, is entering the column at the top. Inert gas is preferably added into the lower part of the column, for example by means of a blower. The liquid phase is then preferably collected in the bottom of the column and withdrawn.

Different kinds of cyclone separators can be used, such as those comprising a substantially cylindrical or at least partially conical vessel where the liquid, with dissolved gaseous components, is introduced substantially tangentially into the vessel, preferably into the upper part of thereof. The liquid phase is preferably leaving the vessel in the bottom and the gaseous product stream is preferably leaving the vessel in the upper part. To further facilitate the gas-liquid separation, the cyclone separator is preferably operated at subatmospheric pressure. Inert gas for diluting the chlorine dioxide may be introduced directly into the cyclone separator or at any stage before or after the separator.

Vented tanks can also be used as a gas-liquid separator. Preferably the tank is provided with a blower for introducing inert gas at the bottom thereof.

The degree of recirculation is preferably set to maintain a sodium sulfate concentration in the recycled stream from 0 to saturation, preferably from 5 to 30 wt% and most preferably from 10 to 20 wt%. The saturation concentration for sodium sulfate depends on the temperature and other parameters such as the concentration of other species, but is usually 35 wt%. Even in cases where no chlorine dioxide containing liquid product is recovered directly from the liquid phase, it is preferred to remove a portion of the liquid phase withdrawn from the gas-liquid separator as a purge stream to avoid buildup of by-products which can lead to precipitation of salt in the system. Such a purge stream can then be neutralized and sent to waste treatment or used in various parts of a pulp mill, for example for adjusting pH. To keep the water balance in the system, makeup water is preferably added to the process at any appropriate feed point in an amount sufficient to maintain the concentration of sodium sulfate in the recycled stream at a desired level.

The gaseous product stream withdrawn from the gas-liquid separator can either be used as it is or be absorbed in preferably cold water (usually having a temperature, from 0 to 25°C), for example like in the large scale processes, to obtain an aqueous solution containing chlorine dioxide. By bringing only from 20 to 80% of the chlorine dioxide into the gaseous product stream it is possible to use the absorbing equipment more efficiently.

The gaseous product stream may be withdrawn from the gas-liquid separator by any suitable means e.g. a device creating a subatmospheric pressure, preferably a fan. The fan can be placed either directly after the gas-liquid separator or, if an absorption column is used, after the absorption column.

The process of the invention is particularly suitable for production of chlorine dioxide in small-scale, for example from 0.5 to 250 kg ClO₂/hr, preferably from 10 to 150 kg ClO₂/hr.

A typical small-scale production unit of the invention normally includes only one reactor, although it is possible to arrange several, for example up to 15 or more reactors in parallel, for example as a bundle of tubes.

The invention further concerns a production unit for the production of chlorine dioxide, said unit comprising:
(a) a reactor provided with one or more feed inlets for acid, reducing agent and alkali metal chlorate;
(b) an eductor connected to the reactor provided with an inlet for motive fluid, means for mixing a product stream from the reactor with motive fluid to obtain a diluted product stream and an outlet for said product stream;
(c) a gas-liquid separator connected to the outlet of the eductor, said gas-liquid separator being designed for bringing from 20 to 80% of the chlorine dioxide from the diluted product stream into a gas phase;and
(d) means for withdrawing a gaseous product stream from the gas-liquid separator; and
(e) means for recirculating at least a portion of the liquid phase withdrawn from the gas-liquid separator as motive fluid for the eductor. Embodiments of the production unit further comprise recovering at least a portion of the liquid phase withdrawn from the gas-liquid separator as a chlorine dioxide containing liquid product.

Regarding preferred features of the production unit the above description of the process is referred to.

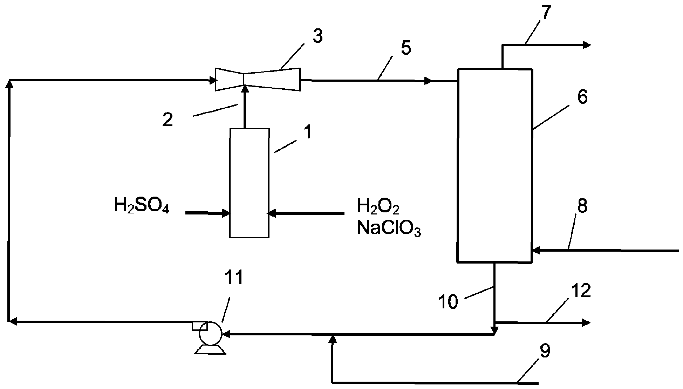

An embodiment of the invention will now be described with reference to the enclosed drawing. The scope of the invention is, however, not limited to this embodiment. The figure schematically shows a process scheme of the invention.

Referring to the Figure, sulphuric acid and a pre-mixed aqueous solution of sodium chlorate and hydrogen peroxide are fed to a vertical through-flow tubular reactor 1 and reacted therein to form a product stream 2 of liquid and foam comprising chlorine dioxide, oxygen, sodium sulfate and some remaining sulfuric acid and sodium chlorate.

An eductor 3 is supplied with motive fluid to generate a slightly subatmospheric pressure bringing the product stream out from the reactor 1 into the eductor 3 where it is mixed with motive fluid to form a diluted product stream 5, which is brought to a gas-liquid separator 6 such as a stripper column, vented tank or a cyclone separator. Air 8 is fed to the gas-liquid separator.

A gaseous product stream 7 is withdrawn from the gas-liquid separator and comprise from 20 to 80% of the chlorine dioxide along with other gaseous components of the diluted product stream and the added air. A liquid phase 10, comprising the remaining part of the chlorine dioxide but separated from the other gaseous components in the diluted product stream, is withdrawn from the gas-liquid separator 6 by a pump 11. A portion of the liquid phase is recovered as a chlorine dioxide containing product stream 12, while make-up water 9 is added to the remaining liquid phase 10 that is recirculated to the eductor 3 where it functions as motive fluid to create a subatmospheric pressure in the reactor 1. In the eductor 3 the recirculated liquid phase is mixed with the product stream from the reactor 1 to form a diluted product stream 5. In order to maintain a sufficiently high temperature in the gas-liquid separator 6 it is possible to supply heat at any appropriate point in the system, for example by letting any one of streams 5, 9, 10 or the combined streams 9 plus 10 passing a heater (not shown).

The process equipment, including the reactor 1, the eductor 3 and the gas-liquid separator 6, are suitably made from materials resistant to the chemicals they are in contact with, such as one or more of hydrogen peroxide, sodium chlorate, sulfuric acid and chlorine dioxide. Such materials include, for example, glass, tantalum, titanium, fiberglass reinforced plastic, fluoro plastics like PVDF (polyvinylidene fluoride) CPVC (chlorinated polyvinyl chloride), PTFE (polytetrafluoro ethylene), PFA (perfluoro alkoxy polymer), ECTFE (ethylene chlorotrifluoro ethylene) or FEP (fluorinated ethylene propylene), or the use of these materials as a liner material to a structural material like steel or stainless steel. Suitable fluoro plastics are sold under the trademarks Kynar®, Teflon® or Halar®.

## Claims

1. A process for the production of chlorine dioxide, said process comprising the steps of continuously:
(a) feeding to a reactor (1) an acid, alkali metal chlorate and a reducing agent;
(b) reacting the alkali metal chlorate with the acid and the reducing agent to form a product stream (2) comprising chlorine dioxide and alkali metal salt of the acid;
(c) bringing the product stream (2) from the reactor (1) to an eductor (3) and mixing it with motive fluid fed to the eductor (3) and thereby forming a diluted product stream (5);
(d) bringing the diluted product stream (5) to a gas-liquid separator where gas is separated from liquid (10) therein,
(e) withdrawing a gaseous product stream (7) comprising chlorine dioxide and inert gas from said gas-liquid separator (6);
(f) withdrawing a liquid phase (10) from the gas-liquid separator (6); wherein from 20 to 80% of the chlorine dioxide in the diluted product stream (5) brought to the gas liquid separator (6) is withdrawn in the gaseous product stream (7); and
(g) further comprising the step of recirculating at least a portion of the liquid phase (10) withdrawn from the gas-liquid separator (6) and feeding it to the eductor (3) as motive fluid.

2. A process as claimed in claim 1 further comprising a step of recovering at least a portion of the liquid phase (10) withdrawn from the gas-liquid separator (6) as a chlorine dioxide containing liquid product (12).

3. A process as claimed in any one of claims 1-2, wherein make-up water (9) is added to the process.

4. A process as claimed in any one of the claims 1-3, wherein inert gas (8) is added to the diluted product stream (5).

5. A process as claimed in any one of the claims 1-4, wherein the acid is sulphuric acid.

6. A process as claimed in any of claims 1-5, wherein the reducing agent is hydrogen peroxide.

7. A process as claimed in any one of the claims 1-6, wherein the reactor (1) is a through-flow vessel or a pipe.

8. A process as claimed in any one of the claims 1-7 , wherein the gas-liquid separator (6) is a stripper column.

9. A process as claimed in any one of the claims 1-8, wherein the gas-liquid separator (6) is a cyclone separator.

10. A process as claimed in any one of the claims 1-9, wherein the gas-liquid separator (6) is a vented tank provided with a blower for introducing inert gas (8) at the bottom thereof.

11. Production unit for the production of chlorine dioxide, said unit comprising:
(a) a reactor (1) provided with one or more feed inlets for acid, reducing agent and alkali metal chlorate;
(b) an eductor (3) connected to the reactor (1) provided with an inlet for motive fluid, means for mixing a product stream (2) from the reactor with motive fluid to obtain a diluted product stream (5) and an outlet for said diluted product stream (5);
(c) a gas-liquid separator (6) connected to the outlet of the eductor (3), said gas-liquid separator (6) being designed for bringing from 20 to 80% of the chlorine dioxide from the diluted product stream (5) into a gas phase;
(d) means for withdrawing a gaseous product stream (7) from the gas-liquid separator (6); and
(e) means for recirculating at least a portion of the liquid phase (10) withdrawn from the gas-liquid separator (6) as motive fluid for the eductor (3).

## Patentansprüche

1. Verfahren zum Herstellen von Chlordioxid, wobei das Verfahren die Schritte des kontinuierlichen:
(a) Speisens einer Säure, eines Alkalimetallchlorats und eines Reduktionsmittels in einen Reaktor (1);
(b) Reagierens des Alkalimetallchlorats mit der Säure und dem Reduktionsmittel, um einen Produktstrom (2) zu bilden, der Chlordioxid und Alkalimetallsalz der Säure umfasst;
(c) Beförderns des Produktsstroms (2) aus dem Reaktor (1) in einen Eduktor (3) und Mischen dieses mit Treibflüssigkeit, die in den Eduktor (3) gespeist wird, und dadurch Bilden eines verdünnten Produktstroms (5);
(d) Beförderns des verdünnten Produktstroms (5) in einen Gas-Flüssigkeitsabscheider, in dem Gas von einer Flüssigkeit (10) abgeschieden wird,
(e) Entnehmens eines gasförmigen Produktstroms (7), der Chlordioxid und Inertgas umfasst, aus dem Gas-Flüssigkeitsabscheider (6);
(f) Entnehmens einer flüssigen Phase (10) aus dem Gas-Flüssigkeitsabscheider (6); wobei 20 bis 80 % des Chlordioxids im verdünnten Produktstrom (5), der in den Gas-Flüssigkeitsabscheider (6) befördert wurde, aus dem gasförmigen Produktstrom (7) entnommen werden,
umfasst; und
(g) ferner umfassend den Schritt des Rezirkulierens zumindest eines Teils der flüssigen Phase (10), die aus dem Gas-Flüssigkeitsabscheider (6) entnommen wurde, und des Speisens dieses zum Eduktor (3) als Treibflüssigkeit.

2. Verfahren nach Anspruch 1, das ferner einen Schritt des Gewinnens zumindest eines Teils der flüssigen Phase (10), die aus dem Gas-Flüssigkeitsabscheider (6) entnommen wurde, als chlordioxidhaltiges flüssiges Produkt (12) umfasst.

3. Verfahren nach einem der Ansprüche 1 bis 2, wobei Ergänzungswasser (9) zum Verfahren hinzugefügt wird.

4. Verfahren nach einem der Ansprüche 1 bis 3, wobei Inertgas (8) zum verdünnten Produktstrom (5) hinzugefügt wird.

5. Verfahren nach einem der Ansprüche 1 bis 4, wobei die Säure Schwefelsäure ist.

6. Verfahren nach einem der Ansprüche 1 bis 5, wobei das Reduktionsmittel Wasserstoffperoxid ist.

7. Verfahren nach einem der Ansprüche 1 bis 6, wobei der Reaktor (1) ein Durchflussgefäß oder ein Rohr ist.

8. Verfahren nach einem der Ansprüche 1 bis 7, wobei der Gas-Flüssigkeitsabscheider (6) eine Strippersäule ist.

9. Verfahren nach einem der Ansprüche 1 bis 8, wobei der Gas-Flüssigkeitsabscheider (6) ein Zyklonabscheider ist.

10. Verfahren nach einem der Ansprüche 1 bis 9, wobei der Gas-Flüssigkeitsabscheider (6) ein belüfteter Tank ist, der an seinem Boden mit einem Gebläse zum Einbringen von Inertgas (8) versehen ist.

11. Herstellungseinheit zum Herstellen von Chlordioxid, wobei die Einheit umfasst:
(a) einen Reaktor (1), der mit einem oder mehreren Zuspeiseeinlässen für Säure, Reduktionsmittel und Alkalimetallchlorat versehen ist;
(b) einen Eduktor (3), der mit dem Reaktor (1) verbunden ist, der mit einem Einlass für Treibflüssigkeit, einem Mittel zum Mischen eines Produktstroms (2) aus dem Reaktor mit Treibflüssigkeit, um einen verdünnten Produktstrom (5) zu erhalten, und einem Auslass für den verdünnten Produktstrom (5) versehen ist;
(c) einen Gas-Flüssigkeitsabscheider (6), der mit dem Auslass des Eduktors (3) verbunden ist, wobei der Gas-Flüssigkeitsabscheider (6) so ausgestaltet ist, dass er 20 bis 80 % des Chlordioxids aus dem verdünnten Produktstrom (5) in eine Gasphase befördert;
(d) ein Mittel zum Entnehmen eines gasförmigen Produktstroms (7) aus dem Gas-Flüssigkeitsabscheider (6); und
(e) ein Mittel zum Rezirkulieren zumindest eines Teils der flüssigen Phase (10), die aus dem Gas-Flüssigkeitsabscheider (6) entnommen wurde, als Treibflüssigkeit für den Eduktor (3).

## Revendications

1. Procédé de production de dioxyde de chlore, ledit procédé comprenant les étapes consistant à, en continu :
(a) alimenter un réacteur (1) en acide, en chlorate de métal alcalin et en agent réducteur ;
(b) faire réagir le chlorate de métal alcalin avec l'acide et avec l'agent réducteur pour former un flux de produit (2) contenant du dioxyde de chlore et un sel de métal alcalin de l'acide ;
(c) porter le flux de produit (2) du réacteur (1) à un éjecteur (3) et le mélanger avec le fluide moteur introduit dans l'éjecteur (3) pour former ainsi un flux (5) de produit dilué ;
(d) porter le flux (5) de produit dilué à un séparateur gaz-liquide où le gaz y est séparé du liquide (10),
(e) prélever un flux de produit gazeux (7) contenant du dioxyde de chlore et du gaz inerte dudit séparateur gaz-liquide (6) ;
(f) prélever une phase liquide (10) du séparateur gaz-liquide (6) ; 20 à 80 % du dioxyde chlore dans le flux (5) de produit dilué étant portés au séparateur gaz-liquide (6) étant prélevés dans le flux (7) de produit gazeux ; et
(g) comprenant en outre l'étape de remise en circulation d'au moins une partie de la phase liquide (10) prélevée du séparateur gaz-liquide (6) et son introduction dans l'éjecteur (3) sous forme de fluide moteur.

2. Procédé selon la revendication 1, comprenant en outre une étape de récupération d'au moins une partie de la phase liquide (10) prélevée du séparateur gaz-liquide (6) sous forme de dioxyde de chlore contenant le produit liquide (12).

3. Procédé selon l'une quelconque des revendications 1 ou 2, dans lequel de l'eau d'appoint (9) est ajoutée lors du procédé.

4. Procédé selon l'une quelconque des revendications 1 à 3, dans lequel du gaz inerte (8) est ajouté au flux (5) de produit dilué.

5. Procédé selon l'une quelconque des revendications 1 à 4, dans lequel l'acide est l'acide sulfurique.

6. Procédé selon l'une quelconque des revendications 1 à 5, dans lequel l'agent réducteur est du peroxyde d'hydrogène.

7. Procédé selon l'une quelconque des revendications 1 à 6, dans lequel le réacteur (1) est un récipient traversé par un écoulement ou un tuyau.

8. Procédé selon l'une quelconque des revendications 1 à 7, dans lequel le séparateur gaz-liquide (6) est une colonne d'extracteur.

9. Procédé selon l'une quelconque des revendications 1 à 8, dans lequel le séparateur gaz-liquide (6) est un séparateur à cyclone.

10. Procédé selon l'une quelconque des revendications 1 à 9, dans lequel le séparateur gaz-liquide (6) est un réservoir ventilé doté d'une soufflante permettant d'introduire du gaz inerte (8) à sa base.

11. Unité de production destinée à la production de dioxyde de chlore, ladite unité comprenant :
(a) un réacteur (1) doté d'au moins une entrée d'admission pour de l'acide, un agent réducteur et un chlorate de métal alcalin ;
(b) un éjecteur (3) relié au réacteur (1), doté d'une entrée pour fluide moteur, un moyen permettant de mélanger un flux de produit (2) provenant du réacteur avec un fluide moteur pour obtenir un flux (5) de produit dilué et une sortie pour ledit flux (5) de produit dilué ;
(c) un séparateur gaz-liquide (6) relié à la sortie de l'éjecteur (3), ledit séparateur gaz-liquide (6) étant conçu pour porter 20 à 80 % du dioxyde de chlore du flux (5) provenant du flux de produit dilué dans une phase gazeuse ;
(d) un moyen de prélèvement d'un flux (7) de produit gazeux du séparateur gaz-liquide (6) ; et
(e) un moyen de remise en circulation d'au moins une partie de la phase liquide (10) prélevée du séparateur gaz-liquide (6) sous forme de fluide moteur pour l'éjecteur (3).
